# EUROPEAN PATENT SPECIFICATION

(11) **EP 2 495 903 B1**
(45) Date of publication and mention of the grant of the patent: **12.02.2014**
(21) Application number: 09850730.4
(22) Date of filing: 28.10.2009
(51) Int. Cl.: H04J 14/06, H04B 10/67

(54) **OPTICAL TRANSMISSION SYSTEM, METHOD AND DEVICE BASED ON POLARIZATION MULTIPLEXING**
OPTISCHES ÜBERTRAGUNGSSYSTEM, VERFAHREN UND VORRICHTUNG AUF DER BASIS VON POLARISATIONSMULTIPLEXING
SYSTÈME, PROCÉDÉ ET DISPOSITIF DE TRANSMISSION OPTIQUE BASÉS SUR LE MULTIPLEXAGE EN POLARISATION

(43) Date of publication of application: 05.09.2012
(73) Proprietor: Huawei Technologies Co., Ltd., Shenzhen, Guangdong 518129 (CN)
(72) Inventor: XIAO, Zhiyu, Shenzhen Guangdong 518129 (CN); XU, Xiaogeng, Shenzhen Guangdong 518129 (CN); TIAN, Dafeng, Shenzhen Guangdong 518129 (CN)
(74) Representative: Isarpatent
(86) International application number: PCT/CN2009/074659
(87) International publication number: WO 2011/050524

(56) References cited:
- EP-A2- 1 345 347
- CN-A- 101 320 502
- CN-A- 101 453 268
- JP-A- 2002 026 820
- US-A1- 2003 202 798

## Description

### FIELD OF THE INVENTION

The present invention relates to the field of communications technologies, and in particular, to an optical transmission technology based on polarization multiplexing.

### BACKGROUND OF THE INVENTION

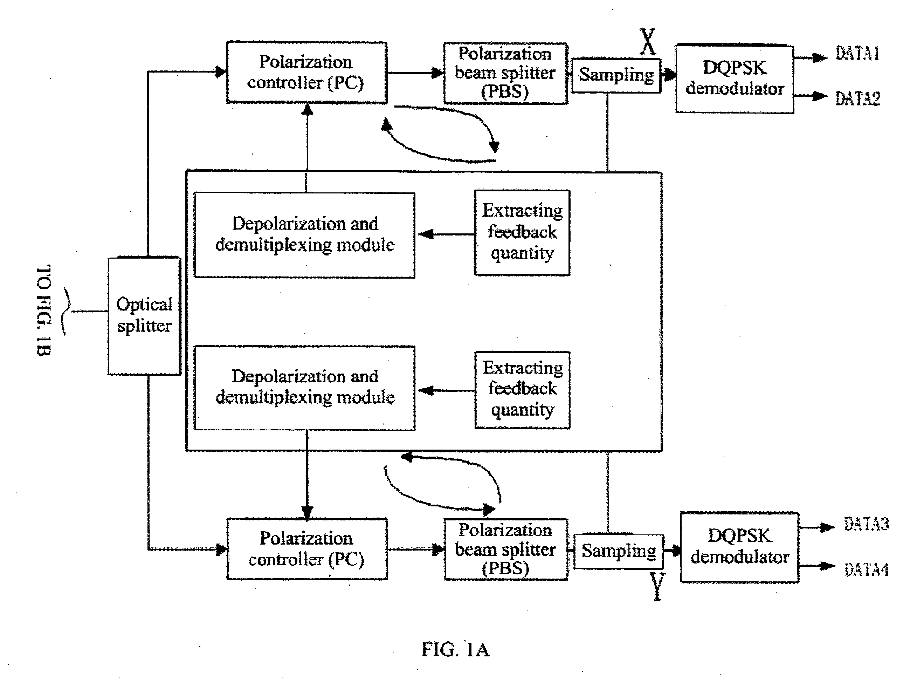

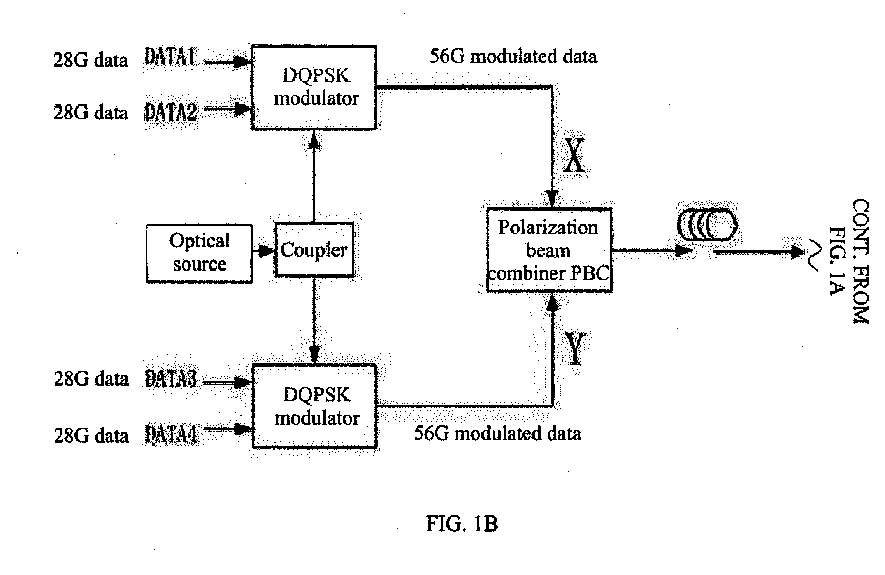

FIG. 1 illustrates an optical transmission system based on polarization multiplexing in a 100Gb/s optical transmission network.

At a transmitting end in FIG. 1, an optical source from a laser is split by a coupler into two optical signals with a single state of polarization. Four 28Gb/s input data signals (also known as electrical signals), namely, DATA1, DATA2, DATA3, and DATA4, are modulated onto two optical signals through a differential quadrature phase shifter keying (Differential Quadrature Phase Shifter Keying, DQPSK) modulator; for example, DATA1 and DATA2 are modulated onto an X optical signal, and DATA3 and DATA4 are modulated onto a Y optical signal, the X and Y optical signals respectively carrying 56Gb/s data. The X and Y optical signals are combined into one optical signal, which carries 112Gb/s data, through a polarization beam combiner (Polarization Beam Combiner, also known as Polarization Combiner, PBC).

At a receiving end in FIG. 1, the received optical signal is split into two optical signals by a beam splitter (also known as an optical splitter); the two optical signals respectively enter a polarization controller (Polarization Controller, PC), where a state of polarization (State Of Polarization, SOP) of the two optical signals is rotated and controlled; the optical signal after being rotated and controlled is input into a polarization beam splitter (Polarization Beam Splitter, also known as Polarization Splitter, PBS); and an X' optical signal having the same state of polarization but a slightly lower power as to the X optical signal and a Y' optical signal having the same state of polarization but a slightly lower power as to the Y optical signal are restored. The X' and Y' optical signals are respectively restored into four 28Gb/s data signals DATA1, DATA2, DATA3, and DATA4 through a DQPSK demodulator.

At the receiving end in FIG. 1, the PC is controlled through a feedback loop, and a feedback signal in the feedback loop is the crosstalk power of the optical signals of different states of polarization among the optical signals. When the optical signal is an optical signal with a single state of polarization, a minimum magnitude of the feedback signal is provided. An optical depolarization and demultiplexing module in the feedback loop controls the PC in real time based on a principle that the magnitude of the feedback signal is minimum, so that the PBS outputs an optical signal with a single state of polarization, namely, the X or Y optical signal.

In practical application, an upper and a lower branch at the receiving end of the preceding system work independently, so that four possible combinations of the optical signals with the single state of polarization output by the upper and lower branches are:
Combination 1: X and X optical signals;
Combination 2: X and Y optical signals;
Combination 3: Y and X optical signals; and
Combination 4: Y and Y optical signals.

Combination 2 is a correct combination mode, and in Combination 3, the original frame format may be restored by using a multi-lane reordering technology. In Combinations 1 and 4, half of the data signals may get lost, so that such combinations must be avoided.

EP 1 345 347 A2 discloses an optical transmitter in an optical transmission system which has a first signal light output unit (24A, 124A) to output a first signal light (S1) of linear polarization to carry a first data (D1) using VSB modulation having one of sideband on a short wavelength side and sideband on a long wavelength side, a second signal light output unit (24B, 124B) to output a second signal light (S2) of linear polarization to carry a second data (D2) using VSB modulation having the other of sideband on a long wavelength side and sideband on a long wavelength side, and an optical coupler (26, 126) to couple the first signal light (S1) and the second signal light (S2) under different polarizations and output the coupled signal lights onto the optical transmission line (12, 112).

US 2003/202798 A1 discloses a parallel monitored and controlled optical PMD compensator comprising a branch optical signal split from an optical signal path. A polarization controller (PC) and differential group delay are disposed in each of the paths. A controller adjusts polarization compensation of the PCs in response to PMD dispersion of the branch optical signal. A PMD monitor is preferably disposed in the branch path providing a monitor signal to the controller for use in adjusting the PCs. A polarization rotator may inject a reference signal into the paths with the PC disposed in the branch path acting as a polarization scrambler. A state of polarization (SOP) of the reference signal may be monitored by polarimeters disposed in both paths and the SOP of the reference signal in the branch path may be provided to the controller for adjusting polarization compensation of the inline PC.

### SUMMARY OF THE INVENTION

Embodiments of the present invention provide a system, a method, and a device for optical transmission based on polarization multiplexing, which substantially prevent the optical signals output by the two branches at the receiving end from having the co-directional state of polarization, without affecting the complexity and implementation cost of the system and the processing time delay of data signals at the receiving end.

A receiving device in the system for optical transmission based on polarization multiplexing provided in an embodiment of the present invention includes two branches, where optical signals polarization multiplexed by a transmitting device are respectively provided to the two branches, and each of the two branches include:
a polarization control module, configured to receive an optical signal from one branch, rotate a state of polarization of the optical signal according to a state of polarization rotation control signal, and output the processed optical signal;
a polarization beam splitting module, configured to perform polarization beam splitting on the optical signal output by the polarization control module in the branch, and output an optical signal with a single state of polarization; and
a feedback control loop module, configured to search for a control quantity according to the optical signal output by the polarization beam splitting module in the branch, track a minimum magnitude of the feedback signal of the control quantity, adjust the control quantity based on a principle that the magnitude of the feedback signal is minimum, output the searched or adjusted control quantity, and provide the state of polarization rotation control signal for the polarization control module in the branch according to the searched or adjusted control quantity.

The receiving device further includes:
a co-direction judging module, configured to, after judging that the similarity between the control quantities output by the feedback control loop modules at the two branches meets a predetermined similarity criterion, enable the feedback control loop module in at least one of the two branches to re-search for the control quantity until the similarity between the control quantities output by the feedback control loop modules at the two branches does not meet the predetermined similarity criterion.

The method for optical transmission based on polarization multiplexing provided in an embodiment of the present invention includes: splitting a polarization multiplexed optical signal into two optical signals, and performing the following operations on the two optical signals:
receiving the optical signal from one branch, rotating a state of polarization of the optical signal in the branch according to a state of polarization rotation control signal, and performing polarization beam splitting on the optical signal of which the state of polarization is rotated to obtain an optical signal with a single state of polarization; and searching for a control quantity according to the optical signal with the single state of polarization, tracking a minimum magnitude of the feedback signal of the control quantity, adjusting the control quantity based on a principle that the magnitude of the feedback signal is minimum, and determining the state of polarization rotation control signal according to the searched or adjusted control quantity.

The method further includes:
co-direction judgment: after judging that the similarity between the control quantities of the two optical signals meets a predetermined similarity criterion, enabling at least one of the two branches to re-search for the control quantity until the similarity between the control quantities of the two optical signals does not meet the predetermined similarity criterion.

The system for optical transmission based on polarization multiplexing provided in an embodiment of the present invention includes a transmitting device and a receiving device, the transmitting device transmitting polarization multiplexed optical signals which are provided to two branches in the receiving device respectively, where each of the two branches include:
a polarization control module, configured to receive an optical signal from one branch, rotate a state of polarization of the optical signal according to a state of polarization rotation control signal, and output the processed optical signal;
a polarization beam splitting module, configured to perform polarization beam splitting on the optical signal output by the polarization control module in the branch, and output an optical signal with a single state of polarization; and
a feedback control loop module, configured to search for a control quantity according to the optical signal output by the polarization beam splitting module in the branch, track a minimum magnitude of the feedback signal of the control quantity, adjust the control quantity based on a principle that the magnitude of the feedback signal is minimum, output the searched or adjusted control quantity, and provide the state of polarization rotation control signal for the polarization control module according to the searched or adjusted control quantity.

The receiving device further includes:
a co-direction judging module, configured to, after judging that the similarity between the control quantities output by the feedback control loop modules at the two branches meets a predetermined similarity criterion, enable the feedback control loop module in at least one of the two branches to re-search for the control quantity until the similarity between the control quantities output by the feedback control loop modules at the two branches does not meet the predetermined similarity criterion.

Based on the preceding description of the technical solutions, the co-direction judgment for the optical signals with the single state of polarization output by the upper and lower branches may effectively prevent the optical signals output from the upper and lower branches at the receiving end having the co-directional state of polarization; and in addition to judging whether the optical signals output from the two branches at the receiving end have the co-directional state of polarization, the co-direction judgment does not increase the hardware cost, so that the technical solutions provided in the present invention substantially prevent the optical signals output from the upper and lower branches at the receiving end from having the co-directional state of polarization, without affecting the complexity and implementation cost of the system and the processing time delay of data signals at the receiving end.

### BRIEF DESCRIPTION OF THE DRAWINGS

FIG. 1 is a schematic diagram of a polarization multiplexing system in the prior art;
FIG. 2 is a schematic diagram of a system for optical transmission based on polarization multiplexing in Embodiment 1 of the present invention;
FIG. 2A is a schematic diagram of a feedback control loop module in Embodiment 1 of the present invention;
FIG. 2B is a schematic diagram of an output control module in Embodiment 1 of the present invention;
FIG. 2C is a schematic diagram of a co-direction judging module in Embodiment 1 of the present invention;
FIG. 2D is a schematic diagram of a transmitting device in Embodiment 1 of the present invention;
FIG. 3 is a schematic diagram of a receiving device in a system for optical transmission based on polarization multiplexing in Embodiment 2 of the present invention;
FIG. 3A is a schematic diagram of preliminary search, preliminary tracking, and co-direction judgment in Embodiment 2 of the present invention;
FIG. 3B is a schematic structural diagram of a co-direction judger in Embodiment 2 of the present invention;
FIG. 3C is a schematic diagram illustrating changes of a state of polarization of optical signals passing through a receiving device in Embodiment 2 of the present invention;
FIG. 3D is a schematic diagram of an OTU frame in Embodiment 2 of the present invention;
FIG. 3E is a schematic diagram of the distribution of the OTU frame in Embodiment 2 of the present invention; and
FIG. 4 is a flowchart of a method for optical transmission based on polarization multiplexing in Embodiment 3 of the present invention.

### DETAILED DESCRIPTION OF THE EMBODIMENTS

### Embodiment 1

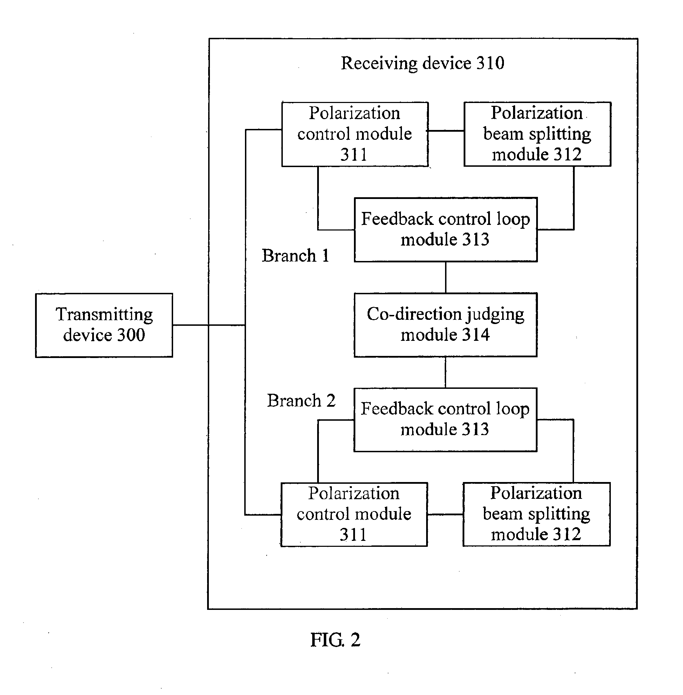

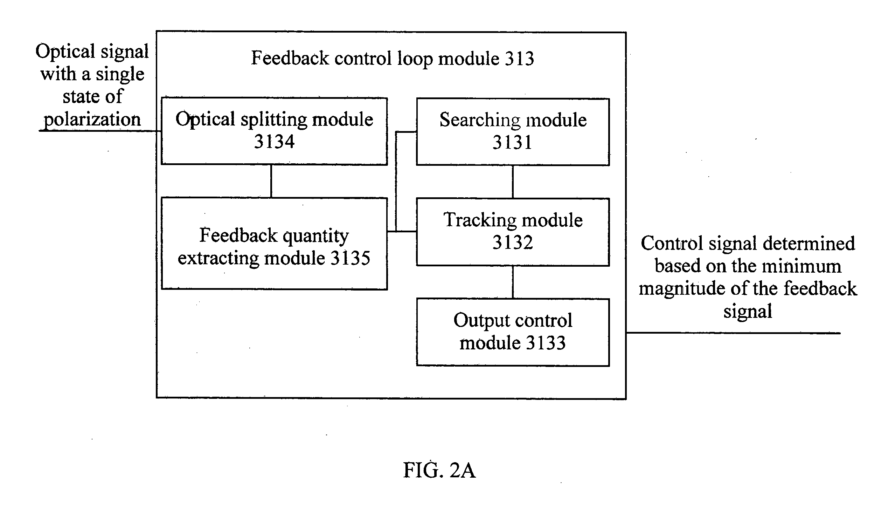

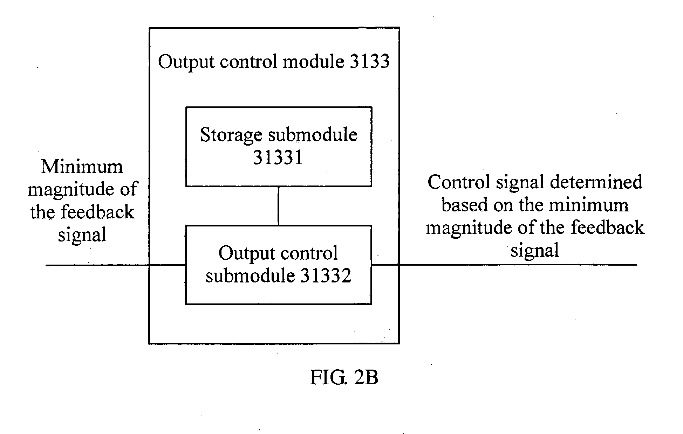

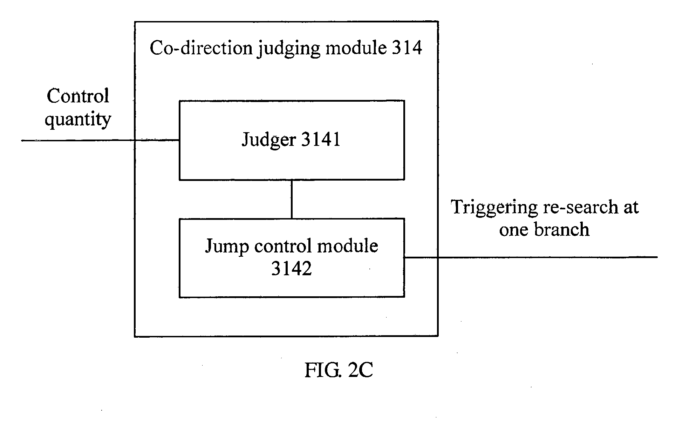

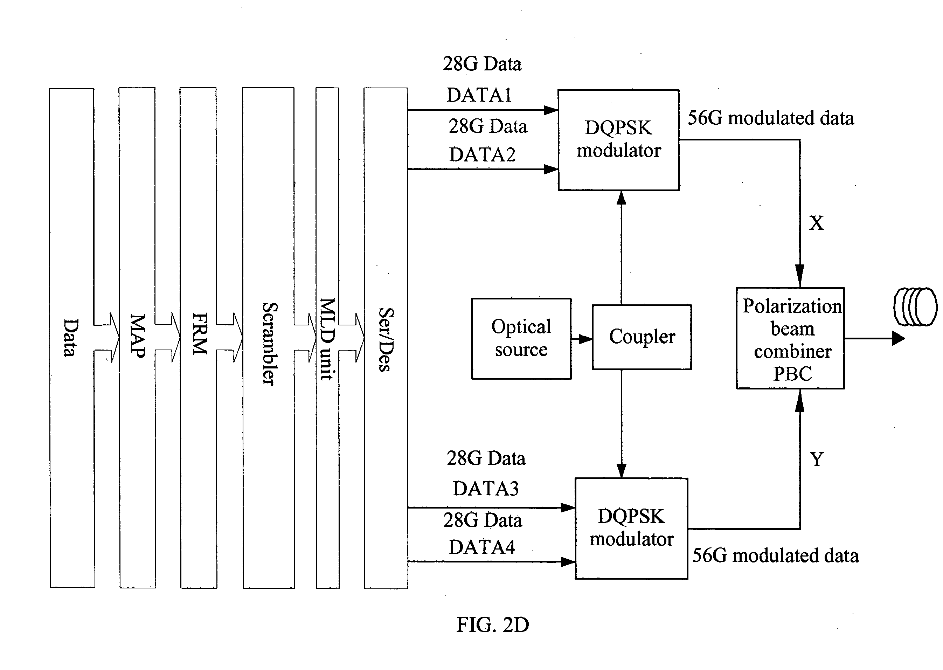

Embodiment 1 relates to a system for optical transmission based on polarization multiplexing. The system is shown in FIG. 2.

The system in FIG. 2 includes a transmitting device 300 and a receiving device 310.

The transmitting device 300 includes two branches. The transmitting device 300 performs polarization multiplexing on optical signals from the two branches, and transmits the polarization multiplexed optical signals. The polarization multiplexed optical signals are respectively provided to two branches, namely, Branch 1 and Branch 2, in the receiving device 310, and Branch 1 and Branch 2 in the receiving device 310 both include: a polarization control module 311, a polarization beam splitting module 312, and a feedback control loop module 313. The receiving device 310 further includes a co-direction judging module 314. The following describes the polarization control module 311, the polarization beam splitting module 312, and the feedback control loop module 313 at Branch 1 as an example for illustration. The operations of the polarization control module 311, the polarization beam splitting module 312, and the feedback control loop module 313 at Branch 2 are the same as the operations of these modules at Branch 1, and are omitted herein.

The polarization control module 311 is configured to receive the optical signal from Branch 1, rotate a state of polarization of the received optical signal according to a state of polarization rotation control signal, and output the processed optical signal. The preceding state of polarization rotation control signal is provided by the feedback control loop module 313.

The polarization control module 311 may include a plurality of wave plates, and an angle of the wave plate may determine a state of polarization rotation direction of the optical signal. Definitely, the polarization control module 311 may also determine the state of polarization rotation direction of the optical signal in a manner other than using the wave plate, so as to rotate the state of polarization of the optical signal. This embodiment does not limit the specific implementation of the rotation of the state of polarization by the polarization control module 311.

When the polarization control module 311 includes a plurality of wave plates, the wave plate in the polarization control module 311 may be driven by a voltage to rotate; that is, the angle of the wave plate varies with the voltage loaded onto the polarization control module 311. Definitely, the wave plate in the polarization control module 311 may also be driven to rotate in a manner, for example, a physical driving manner, other than the voltage driving manner. This embodiment does not limit the specific implementation of driving the rotation of the wave plate in the polarization control module 311.

When the wave plate in the polarization control module 311 is driven by a voltage to rotate, the state of polarization rotation control signal for the polarization control module 311 may be a voltage loaded onto the polarization control module 311. When the wave plate in the polarization control module 311 is driven in a different manner or the polarization control module 311 rotates the state of polarization in a manner other than using the wave plate, the polarization rotation control signal must change the expression manner adaptively.

The polarization beam splitting module 312 is configured to perform polarization beam splitting on the optical signal output by the polarization control module 311 at Branch 1, and output an optical signal with a single state of polarization.

The feedback control loop module 313 is configured to search for a control quantity according to the optical signal output by the polarization beam splitting module 312 in Branch 1, track a minimum magnitude of the feedback signal of the control quantity, adjust the control quantity based on a principle that the magnitude of the feedback signal is minimum, output the control quantity, and provide the state of polarization rotation control signal for the polarization control module 311 according to the control quantity.

The control quantity output by the feedback control loop module 313 may be the searched or adjusted control quantity. That is, the control quantity output by the feedback control loop module 313 at a time point is either the searched control quantity or the adjusted control quantity. The control quantity based on which the feedback control loop module 313 provides the state of polarization rotation control signal for the polarization control module 311 is either the searched control quantity or the adjusted control quantity. That is, the control quantity based on which the feedback control loop module 313 provides the state of polarization rotation control signal for the polarization control module 311 at a time point is either the searched control quantity or the adjusted control quantity.

When the polarization control module 311 includes a plurality of wave plates, the control quantity output by the feedback control loop module 313 may be the angle of the wave plate.

The co-direction judging module 314 is configured to, after judging that the similarity between the control quantities output by the feedback control loop modules 313 of the two branches meets a predetermined similarity criterion, enable the feedback control loop module 313 of at least one of the two branches to re-search for the control quantity until the similarity between the control quantities output by the feedback control loop modules 313 of the two branches does not meet the predetermined similarity criterion. Generally, after judging that the similarity between the control quantities output by the feedback control loop modules 313 of the two branches reaches the predetermined similarity criterion, the co-direction judging module 314 triggers the feedback control loop module 313 at one of the two branches to re-search for the control quantity, so that the feedback control loop module 313 at this branch may provide a control signal for the polarization control module 313 by using the re-searched control quantity.

If the similarity between the control quantities meets the predetermined similarity criterion, it indicates that the control quantities used by the two branches are the same or similar; and if the similarity between the control quantities does not meet the predetermined similarity criterion, it indicates that the control quantities used by the two branches are neither the same nor similar. The preceding predetermined similarity criterion may be set as required.

An example of judging by the co-direction judging module 314 whether the similarity between the control quantities output by the feedback control loop modules 313 of the two branches meets the predetermined similarity criterion is as follows: judging whether a difference between the control quantities output by the feedback control loop modules 313 of the two branches is smaller than a first predetermined value, where if the difference between the control quantities output by the feedback control loop modules 313 of the two branches is smaller than the first predetermined value, it indicates that the control quantities used by the two feedback control loop modules 313 are the same or similar; and in practical application, the first predetermined value may be set as required; while if the co-direction judging module 314 judges that the difference between the control quantities is smaller than the first predetermined value, it indicates that the similarity between the control quantities meets the predetermined similarity criterion; and if the co-direction judging module 314 judges that the difference between the control quantities is not smaller than the first predetermined value, it indicates that the similarity between the control quantities does not meet the predetermined similarity criterion. The term "smaller than" in this example also means "smaller than or equal to".

Another example of judging by the co-direction judging module 314 whether the similarity between the control quantities output by the feedback control loop modules 313 of the two branches meets the predetermined similarity criterion is as follows: judging whether a value obtained by dividing the control quantity output by one of the feedback control loop modules 313 of the two branches with the control quantity output by the other one of the feedback control loop modules 313 of the two branches is larger than a second predetermined value, where if the value obtained by dividing the control quantity output by one of the feedback control loop modules 313 of the two branches with the control quantity output by the other one of the feedback control loop modules 313 of the two branches is larger than the second predetermined value, it indicates that the control quantities used by the two feedback control loop modules 313 are the same or similar; and in practical application, the second predetermined value may be set as required; while if it is judged that the value obtained by dividing one of the control quantities with the other one is larger than the second predetermined value, it indicates that the similarity between the control quantities meets the predetermined similarity criterion; and if it is judged that the value obtained by dividing one of the control quantities with the other one is not larger than the second predetermined value, it indicates that the similarity between the control quantities does not meet the predetermined similarity criterion. The term "larger than" in this example also means "larger than or equal to".

FIG. 2A illustrates the structure of the preceding feedback control loop module 313.

The feedback control loop module 313 in FIG. 2A includes: a searching module 3131, a tracking module 3132, an output control module 3133, an optical splitting module 3134, and a feedback quantity extracting module 3135.

The optical splitting module 3134 is configured to split the optical signal with the single state of polarization output by the polarization beam splitting module 312 to obtain one optical signal, and output the optical signal.

The feedback quantity extracting module 3135 is configured to extract a magnitude of the feedback signal from the optical signal output by the optical splitting module 3134, and output the magnitude of the feedback signal. The magnitude of the feedback signal output by the feedback quantity extracting module 3135 may be provided to the searching module 3131 and the tracking module 3132.

In this embodiment, the magnitude of the feedback signal extracted by the feedback quantity extracting module 3135 may be an RF (radio frequency) power. Definitely, the magnitude of the feedback signal extracted by the feedback quantity extracting module 3135 may also be other parameters. This embodiment does not limit the specific expression manner of the magnitude of the feedback signal extracted by the feedback quantity extracting module 3135.

At a preliminary search stage, the searching module 3131 is configured to generate a group of control quantities in a predetermined distribution manner (for example, randomly), successively output the generated control quantities, and transmit the output control quantities to the output control module 3133. The output control module 3133 determines the state of polarization rotation control signal according to the control quantity output by the searching module 3131, and outputs the state of polarization rotation control signal to the polarization control module 311. The searching module 3131 receives the magnitude of the feedback signal extracted by the feedback quantity extracting module 3135, so that the searching module 3131 obtains the magnitude of the feedback signal corresponding to each control quantity in the group of control quantities. The searching module 3131 selects one control quantity from the group of control quantities based on a principle that the magnitude of the feedback signal is minimum. The selected control quantity is the searched control quantity. The searching module 3131 outputs the searched control quantity. The searched control quantity output by the searching module 3131 is transmitted to the co-direction judging module 314 and the tracking module 3132. The searching module 3131 may also provide the tracking module 3132 with the magnitude of the feedback signal corresponding to the searched control quantity.

At a re-search stage (namely, a secondary search stage), the searching module 3131 is configured to re-search for the control quantity under the control of the co-direction judging module 314, and output the re-searched control quantity. Note that the specific process for the searching module 3131 to re-search for the control quantity may be the same as the specific process of searching for the control quantity at the preliminary search stage. That is, the searching processes at the preliminary and re-search stages may be the same, but the triggering conditions may be different. For example, when the receiving device 310 is powered on or restarts, the searching module 3131 is at the preliminary search stage. When the co-direction judging module 314 judges that the control quantities used by the two branches are the same or similar, the searching module 3131 is at the secondary search stage.

After receiving the control quantity output by the searching module 3131, the tracking module 3132 tracks the minimum magnitude of the feedback signal of the control quantity based on the magnitude of the feedback signal output by the feedback quantity extracting module 3135, adjusts the received control quantity based on a principle that the magnitude of the feedback signal is minimum, and outputs the adjusted control quantity. When the searching module 3131 is at the preliminary search stage and the re-search stage, the tracking module 3132 may stop the tracking operation. The tracking module 3132 may stop the tracking operation under the control of the co-direction judging module 314; for example, after judging that the control quantities used by the two branches are the same or similar, the co-direction judging module 314 outputs a control command. After receiving the control command, the searching module 3131 re-searches for the control quantity; and after receiving the control command, the tracking module 3132 stops the tracking operation and waits for the control quantity output by the searching module 3131.

With the change of the optical signal received by the receiving device 310, the magnitude of the feedback signal tracked by the tracking module 3132 changes accordingly. After adjusting the control quantity based on the principle that the magnitude of the feedback signal is minimum, the tracking module 3132 may transmit the adjusted control quantity to the output control module 3133 and the co-direction judging module 314.

After receiving the control quantity and the magnitude of the feedback signal output by the searching module 3131 at the preliminary search stage, the tracking module 3132 may start tracking by taking the received control quantity and magnitude of the feedback signal as the start point. When the searching module 3131 is at the preliminary search stage, before the searching module 3131 outputs the control quantity, the tracking module 3132 does not need to perform the tracking operation.

After receiving the control quantity transmitted from the searching module 3131 or the tracking module 3132, the output control module 3133 is configured to determine the state of polarization rotation control signal for the polarization control module 311 based on the received control quantity, and provide the determined state of polarization rotation control signal for the polarization control module 311.

FIG. 2B illustrates the structure of the preceding output control module 3133.

The output control module 3133 in FIG. 2B includes: a storage submodule 31331 and an output control submodule 31332.

The storage submodule 31331 is configured to store a corresponding relation between the storage value and the angle of the wave plate.

After receiving the control quantity output by the searching module 3131 or the tracking module 3132, the output control submodule 31332 is configured to determine the voltage value corresponding to the control quantity, that is, the angle of the wave plate, output by the searching module 3131 or the tracking module 3132 based on the corresponding relation stored in the storage submodule 31331, and provide a voltage for the polarization control module 311 based on the determined voltage value.

FIG. 2C illustrates the structure of the preceding co-direction judging module 314.

The co-direction judging module 314 in FIG. 2C includes: a judger 3141 and a jump control module 3142.

The judger 3141 is configured to judge whether the similarity between the control quantities output by the feedback control loop modules 313 of the two branches meets the predetermined similarity criterion, where if the similarity between the control quantities output by the feedback control loop modules 313 of the two branches meets the predetermined similarity criterion, the judger 3141 outputs a jump control signal; and if the similarity between the control quantities output by the feedback control loop modules 313 of the two branches does not meet the predetermined similarity criterion, the judger 3141 does not output any jump control signal.

The two control quantities received by the judger 3141 for similarity judgment may be: the control quantities respectively output by the searching modules 3131 of the two branches; may also be the control quantities respectively output by the tracking modules 3132 of the two branches; and may further be the control quantity output by the searching module 3131 of one branch and the control quantity output by the tracking module 3132 of the other branch. When the judger 3141 outputs the jump control signal, and the jump control module 3142 triggers, according to the received jump control signal, the feedback control loop module 313 at one of the two branches to re-search for the control quantity, the two control quantities for which the judger 3141 judges the similarity may be the control quantity output by the searching module 3131 at one branch and the control quantity output by the tracking module 3132 at the other branch.

The specific process for the judger 3141 to judge whether the similarity between the control quantities meets the predetermined similarity criterion is the same as the specific process of the preceding co-direction judging module 314, and is omitted herein.

After receiving the jump control signal output by the judger 3141, the jump control module 3142 is configured to trigger one feedback control loop module 313 to re-search for the control quantity; for example, the jump control module 3142 triggers the searching module 3131 at one branch to enter the re-search stage, namely, the jump control module 3142 triggers one branch to re-search for the control quantity. In addition, the jump control module 3142 may also trigger the tracking module 3132 receiving the instruction to stop the tracking operation.

Note that the transmitting device 300 in this embodiment may be a transmitting device in the prior art. FIG. 2D illustrates an exemplary structure of the transmitting device 300.

In FIG. 2D, the transmitting device 300 includes: a mapper, a framer (FRM), a scrambler, a multi-lane distributor (MLD), a serializer/deserializer (SER/DES), an optical source, a coupler, two DQPSK modulators, two PBCs, and so on.

In the transmitting device 300, data to be transmitted is converted into an OTU frame after being mapped by the mapper and being framed by the framer. The OTU frame, after being scrambled by the scrambler, enters the multi-lane distributor for multi-lane distribution. In this way, 10×11.2Gb/s data is obtained. The 10×11.2Gb/s data, after being serialized/deserialized by the SER/DES, is converted into 4×28Gb/s data signals, namely, DATA1, DATA2, DATA3, and DATA4.

In the transmitting device 300, the optical source is split by the coupler into two optical signals with a single state of polarization. 4×28Gb/s data signals, namely, DATA1, DATA2, DATA3, and DATA4, are modulated onto two optical signals through a DQPSK modulator. The two optical signals are respectively referred to as an X optical signal and a Y optical signal. For example, DATA1 and DATA2 are modulated onto the X optical signal through one DQPSK modulator, and DATA3 and DATA4 are modulated onto the Y optical signal through the other DQPSK modulator. The X optical signal and the Y optical signal respectively carry 56Gb/s data. The X and Y optical signals are polarization multiplexed into one optical signal through the PBCs. The polarization multiplexed optical signal carries 112Gb/s data.

This embodiment does not limit the specific structure of the transmitting device 300.

Based on the description of Embodiment 1, the co-direction judging module 314 is added to the receiving device 310 in this embodiment. The co-direction judging module 314 compares the similarity between the control quantities of the two branches to judge whether the states of polarization of the optical signals with the single state of polarization output by the two branches are co-directional. When the co-direction judging module 314 judges that the control quantities are similar, the feedback control loop module 313 of at least one of the two branches re-searches for the control quantity, and the co-direction judging module 314 continues to compare the similarity between the control quantities until the control quantities used by the two branches are neither the same nor similar. This ensures that the polarization beam splitting modules 312 of the two branches output optical signals which respectively have a single state of polarization, the two states of polarization being orthogonal, thereby avoiding a combination of the X and X optical signals and a combination of the Y and Y optical signals. The judgment of the similarity between the control quantities by the co-direction judging module 314 substantially does not increase the processing workload of the system, and the implementation of the co-direction judging module 314 does not require specific hardware. Therefore, in practical application, this embodiment does not increase the hardware cost or system complexity. The judgment of the similarity between the control quantities by the co-direction judging module 314 in this embodiment avoids incorrect combinations of the optical signals at the two branches. Therefore, the feedback control loop module 313 in this embodiment may use the RF power as the magnitude of the feedback signal. In this way, this embodiment may quickly identify whether the states of polarization of the optical signals of the two branches are co-directional, thereby ensuring the data processing efficiency of the system for optical transmission based on polarization multiplexing.

The preceding description of the system for optical transmission based on polarization multiplexing in Embodiment 1 also reveals the specific structure of the receiving device in the system for optical transmission based on polarization multiplexing. Embodiment 2 describes the receiving device in the system for optical transmission based on polarization multiplexing for a specific application.

### Embodiment 2

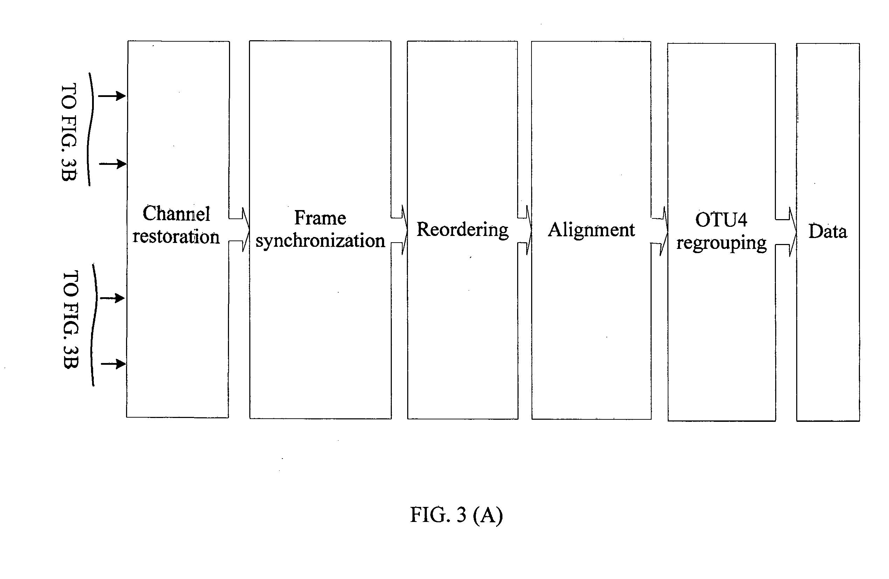

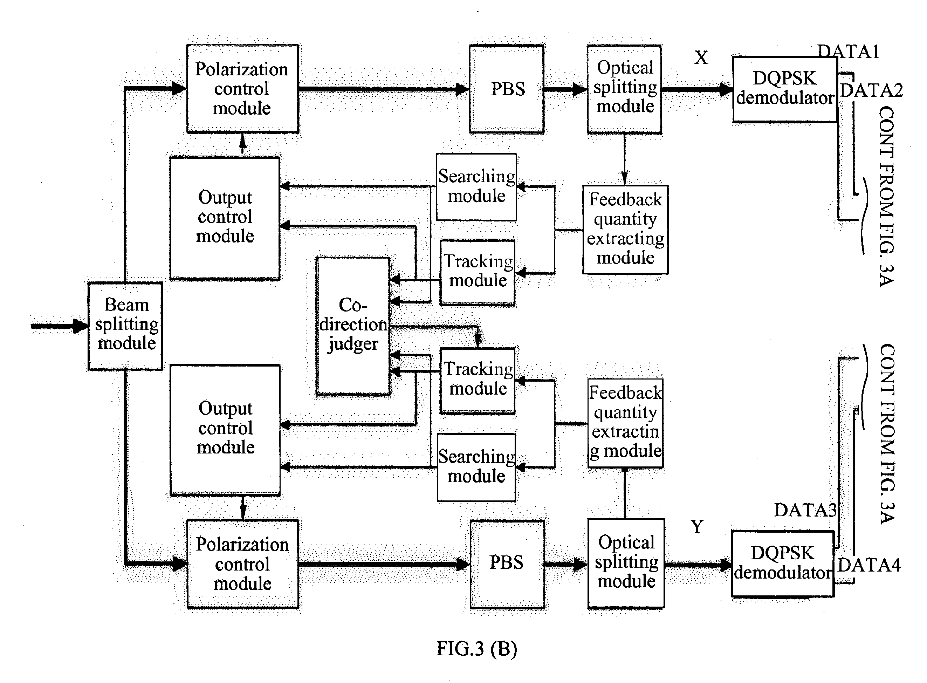

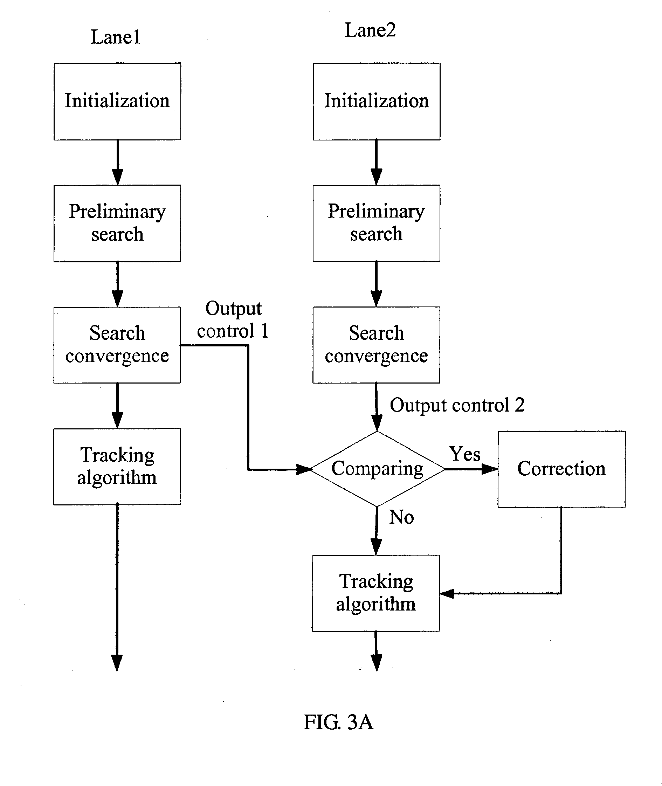

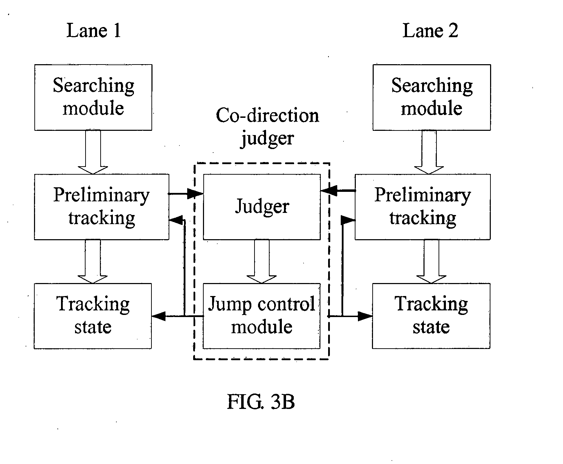

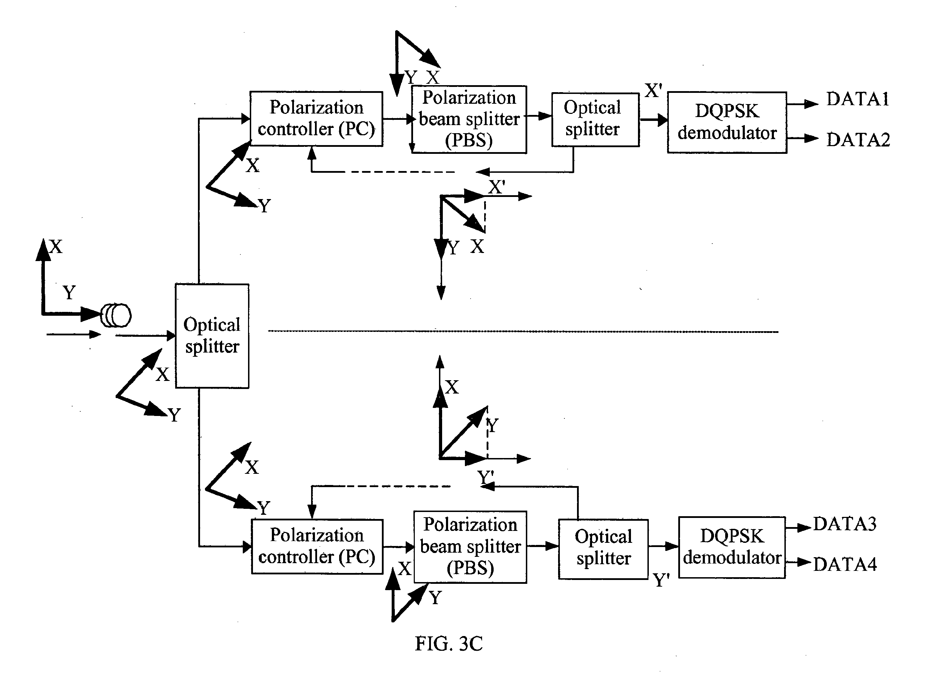

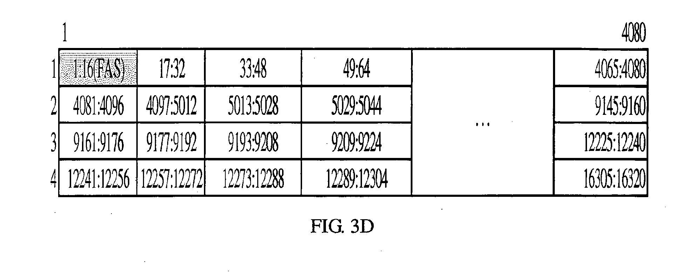

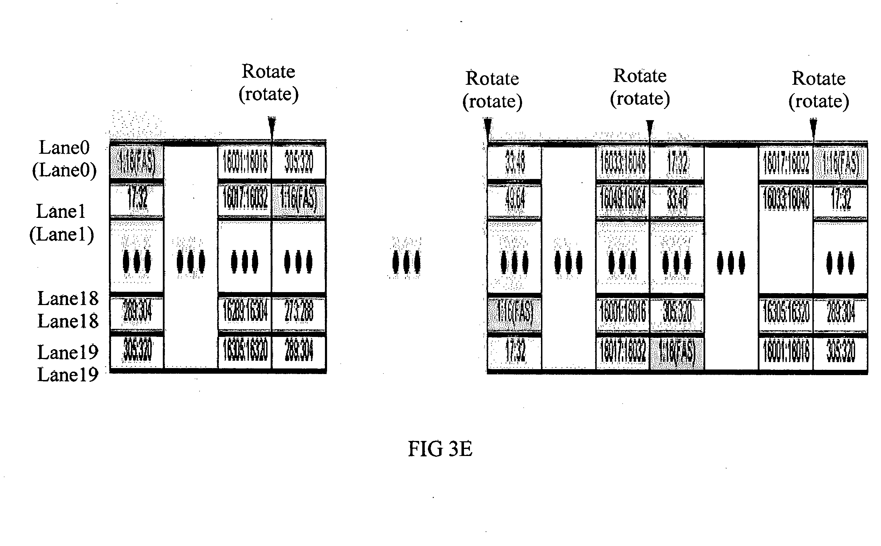

Embodiment 2 relates to a receiving device in a system for optical transmission based on polarization multiplexing. The specific structure of the receiving device is shown in FIG. 3.

The receiving device in FIG. 3 includes: a beam splitting module, a polarization controller (also known as a polarization control module), a PBS (also known as a polarization beam splitting module), an optical splitting module, a feedback quantity extracting module, a searching module, a tracking module, a co-direction judger (also known as a co-direction judging module), and an output control module.

The beam splitting module in the receiving device splits the received polarization multiplexed optical signal into two optical signals. The beam splitting module may be a 3db beam splitter.

The two optical signals pass through the polarization controllers at the respective branches, and the polarization controllers conduct state of polarization rotation control for the received optical signals and output the optical signals for which the state of polarization rotation control is conducted. That is, when the two optical signals are a first optical signal and a second optical signal, the first optical signal passes through the polarization controller at Branch 1, and the second optical signal passes through the polarization controller at Branch 2.

After the optical signals output by the polarization controllers at the two branches pass through the PBSs at the respective branches, X' and Y' optical signals are restored. The X' optical signal has the same state of polarization and a slightly lower power as to the X optical signal. The Y' optical signal has the same state of polarization and a slightly lower power as to the Y optical signal. Here, the X and Y optical signals are the two optical signals for polarization multiplexing in the transmitting device. If both the X and Y optical signals carry 56Gb/s data, the optical signal received by the beam splitting module in the receiving device carry 112Gb/s data, and the two optical signals output by the beam splitting module both carry 112Gb/s data; the X' optical signal output by the PBS at the upper branch carries 56Gb/s data carried by the X optical signal, and the Y' optical signal output by the PBS at the lower branch carries 56Gb/s data carried by the Y optical signal.

The optical splitting modules at the two branches respectively split the optical signals output by the PBSs at the respective branches, and output the split optical signals. Similar to the preceding beam splitting module, the optical splitting module may also be a 3db beam splitter.

The feedback quantity extracting modules at the two feedback control loops respectively extract the magnitude of the feedback signals from the optical signals split at the respective branches, and provide the extracted magnitude of the feedback signals to the searching module and the tracking module. The magnitude of the feedback signal extracted by the feedback quantity extracting module may be an RF power. The RF power may be a crosstalk power of the optical signals of different states of polarization. The feedback quantity extracting module may select a part of the power spectrum at a low frequency band (for example, 300 MHz to 10 GHz), and then perform integration to obtain the value of the interference component, namely, the crosstalk power. When the optical signal is an optical signal with a single state of polarization, a minimum magnitude of the feedback signal is obtained.

At the preliminary search stage, the searching modules at the two feedback control loops respectively generate a group of control quantities, and output the control quantities in the group successively. The output control module converts the control quantities output by the searching module into a corresponding state of polarization rotation control signal and then transmits the obtained signal to the polarization control module, so that the polarization control module is enabled to output, under the control of the state of polarization rotation control signal, the optical signal for which the state of polarization rotation control is conducted corresponding to the control signal. In this way, the feedback quantity extracting module may also extract the magnitude of the feedback signal corresponding to each control quantity. The searching module receives the magnitude of the feedback signals corresponding to the control quantities output by the feedback quantity extracting module, compares the magnitude of the feedback signals corresponding to the control quantities, selects the minimum control quantity, and provides the selected control quantity and the magnitude of the feedback signal corresponding to the selected control quantity to the tracking module. In addition, the searching module provides the selected control quantity to the co-direction judger.

After receiving the control quantities and the magnitude of the feedback signals output by the searching modules, the tracking modules at the two feedback control loops respectively track the magnitude of the feedback signals corresponding to the control quantities, and adjust the control quantities based on a principle that the magnitude of the feedback signal is minimum. The tracking modules respectively transmit the adjusted control quantities to the co-direction judger and the output control module.

The co-direction judger judges the similarity between the control quantities output by the two branches to determine whether the control quantities at the two branches are the same or similar. If they are the same or similar, the co-direction judger may trigger the searching module in at least one of the two feedback control loops to re-search for the control quantity until the control quantities of the two branches are neither the same nor similar.

The polarization multiplexed optical signal should include two different states of polarization. Therefore, the magnitude of the feedback signals have two minimum values in the solution space, and the two minimum values are respectively corresponding to the state of polarization of the X optical signal and the state of polarization of the Y optical signal. The output control module at the feedback control loop may receive the control quantities which are adjusted by the tracking module based on a principle that the magnitude of the feedback signal is minimum according to the magnitude of the feedback signals tracked in real time. The output control module controls the polarization controller in real time based on the received control quantities. In addition, the co-direction judging module ensures that the control quantities used by the two branches are neither the same nor similar. Therefore, the tracking module may track the two minimum values in the solution space. This enables the PBSs at the upper and lower branches to output the optical singles with a single state of polarization, namely, the X optical signal and the Y optical signal.

The process of controlling the polarization controller is called a feedback control process. The feedback control process may include searching, tracking, and co-direction judgment. That is, the searching module, the tracking module, the co-direction judger, and the output control module in this embodiment implement the feedback control process. The purpose of the feedback control process is to ensure that the magnitude of the feedback signal is stable at a minimum value and the state of polarization controls by the polarization controllers on the optical signals are neither the same nor similar.

The search and tracking operation in the feedback control process includes two stages:
Stage 1, that is, the search stage: The searching modules at the upper and lower branches respectively output a group of random and uniform control quantities in a predetermined distribution manner. The searching module selects a control quantity corresponding to the minimum magnitude of the feedback signal based on a magnitude of the feedback signals transmitted by the feedback quantity extracting module, and transmits the selected control quantity and the magnitude of the feedback signal corresponding to the selected control quantity to the tracking module; and meanwhile, may provide the selected control quantity to the co-direction judger.
Stage 2, that is, the tracking stage: By taking the control quantity and the magnitude of the feedback signal output by the searching module as the start point, the tracking module tracks the magnitude of the feedback signal based on a principle that the magnitude of the feedback signal is minimum; and during the tracking of the magnitude of the feedback signal, the tracking module needs to adjust the control quantity based on the tracked magnitude of the feedback signal to ensure that the magnitude of the feedback signal in the system is always a minimum value.

The co-direction judger receives the control quantities output by the searching modules or the tracking modules in the two feedback control loops, and compares the control quantities of the two branches to determine whether they are the same or similar. When the co-direction judger determines that the two control quantities are the same or similar, at least one of the searching modules at the two feedback control loops re-enters the search stage to ensure that the control quantities of the two branches are neither the same nor similar. Generally, the co-direction judger triggers one searching module to enable the searching module to re-enter the search stage.

FIG. 3A shows an example in which the searching module, the tracking module, and the co-direction judger respectively perform the searching, tracking, and co-direction judgment functions.

In FIG. 3A, Lane 1 and Lane 2 are two feedback control loops. After the receiving device is reset, the searching modules at Lane 1 and Lane 2 respectively perform initialization. After that, the searching modules at Lane 1 and Lane 2 respectively conduct the preliminary search, that is, the searching module generates a group of control quantities, and records the depolarization degree of each control quantity. The depolarization degree may be embodied by the magnitude of the feedback signal, so that the magnitude of the feedback signal of each control quantity may be recorded. After that, the searching modules at Lane 1 and Lane 2 respectively enter the search convergence stage, that is, the searching module selects the control quantity with a desirable polarization degree based on the recorded polarization degrees, and then outputs the control quantity. The searching module at Lane 1 outputs a control quantity 1 and transmits the control quantity 1 to the co-direction judger and the tracking module at Lane 1; and optionally, the searching module at Lane 1 may also output the magnitude of the feedback signal of the control quantity 1 to the tracking module at Lane 1, so that the tracking module at Lane 1 may start tracking by taking the control quantity 1 and the magnitude of the feedback signal of the control quantity 1 as the start point. The searching module at Lane 2 outputs a control quantity 2 and transmits the control quantity 2 to the co-direction judger.

By taking the control quantity 1 and the magnitude of the feedback signal output by the searching module as the start point, the tracking module at Lane 1 tracks the magnitude of the feedback signal of the control quantity 1 based on a principle that the magnitude of the feedback signal is minimum. The magnitude of the feedback signal of the control quantity 1 is the magnitude of the feedback signal corresponding to the control quantity 1.

The co-direction judger compares the received control quantity 1 and control quantity 2 to judge whether they are the same or similar. If the control quantity 1 and the control quantity 2 are the same or similar, the co-direction judger notifies the searching module at Lane 2 to adjust the control quantities. That is, the searching module at Lane 2 re-searches for the control quantity based on the notification from the co-direction judger, outputs a group of new control quantities, selects a control quantity from this group of new control quantities based on a principle that the magnitude of the feedback signal is minimum to determine the adjusted control quantity, and then transmits the adjusted control quantity to the tracking module at Lane 2. By taking the adjusted control quantity and the magnitude of the feedback signal of the adjusted control quantity output by the searching module as the start point, the tracking module at Lane 2 starts tracking the magnitude of the feedback signal of the adjusted control quantity based on the principle that the magnitude of the feedback signal is minimum. If the co-direction judger judges that the control quantity 1 and the control quantity 2 are neither the same nor similar during the preceding judgment process, the tracking module at Lane 2, by taking the control quantity 2 and the magnitude of the feedback signal output by the searching module as the start point, starts tracking the magnitude of the feedback signal of the control quantity 2 based on the principle that the magnitude of the feedback signal is minimum to ensure that the magnitude of the feedback signal is stable at a minimum value.

After the process of searching, tracking, and co-direction judgment illustrated in FIG. 3A, the co-direction judger still judges whether the control quantities at the two lanes are the same or similar, and the searching module at Lane 2 still re-searches for the control quantities under the control of the co-direction judger; after the searching module outputs the re-searched control quantities, the tracking module at Lane 2 starts tracking based on the control quantities re-searched by the searching module until the co-direction judger judges that the control quantities at the two lanes are neither the same nor similar. After that, the PBSs at Lane 1 and Lane 2 output optical signals which respectively have a single state of polarization, the two states of polarization being orthogonal. That is, the PBS at Lane 1 outputs the X optical signal, and the PBS at Lane 2 outputs the Y optical signal; or the PBS at Lane 1 outputs the Y optical signal, and the PBS at Lane 2 outputs the X optical signal. The X and Y optical signals respectively output by Lane 1 and Lane 2 may be efficiently depolarized by the tracking modules at the respective lanes.

The re-search operation for the control quantities by the preceding searching module at Lane 2 is also called a jump operation. An example of the jump operation is as follows. Lane 2 re-enters the searching module, and the searching module at Lane 2 randomly generates a group of new control quantities and selects a control quantity in this group of new control quantities; that is, the searching module at Lane 2 randomly searches for the control quantity. The searching module at Lane 2 transmits the randomly searched control quantity to the tracking module and the co-direction judger at Lane 2. If the preceding randomly searched new control quantity is still the same as or similar to the control quantity at Lane 1, the preceding jump operation is repeated until the control quantity randomly searched by the searching module at Lane 2 is neither the same as nor similar to the control quantity at Lane 1.

FIG. 3B illustrates the structure of the co-direction judger that conducts jump control.

The co-direction judger in FIG. 3B includes: a judger and a jump control module.

The control quantities output by the searching modules at Lane 1 and Lane 2 are respectively provided to the tracking modules at the respective lanes, and the tracking modules respectively start tracking by taking the control quantities provided by the searching modules as the start point. In the duration from the moment that the tracking module receives the control quantity to the moment that the tracking module starts tracking for a while by taking the control quantity as the start point, the system may be unstable, the control quantities may be adjusted too much, and the tracked minimum magnitude of the feedback signal may change too much. Therefore, the tracking conducted by the tracking module during this period may be called the preliminary tracking. After the preliminary tracking, the system becomes relatively stable, the control quantities may be adjusted a bit, and the minimum magnitude of the feedback signal may change a bit, and the tracking module enters the tracking state. The tracking module may use the same tracking algorithm at the preliminary tracking stage and after entering the tracking state.

The judger judges whether the control quantities at Lane 1 and Lane 2 are the same or similar; and if the control quantities at Lane 1 and Lane 2 are the same or similar, the judger outputs a jump control signal, namely, a jump instruction. After receiving the jump instruction, the jump control module triggers the searching module at either of the two lanes to re-search for the control quantity. The jump control module may also transmit a jump instruction to the tracking module to notify the tracking module to stop tracking. Then, after receiving the control quantity and the magnitude of the feedback signal output by the searching module, the tracking module starts tracking by taking the received control quantity and magnitude of the feedback signal as the start point. The tracking module may receive the jump instruction output by the jump control module either at the preliminary tracking stage or after entering the tracking state.

The judgment process conducted by the co-direction judger in this embodiment may be implemented by using a judgment algorithm. The judgment algorithm for implementing the judgment process may be embedded into a PC control process. The PC control process may be implemented by using a PC control algorithm. Therefore, the judgment algorithm may be embedded into the PC control algorithm, and the PC control algorithm may be used to implement the process for the feedback control loop and the co-direction judging module to control the PC. In this way, the system for optical transmission based on polarization multiplexing may control the convergence direction (for example, tracking the X or Y lane) well in real time, and achieve a quick response.

In FIG. 3, the output control modules at the two branches conduct state of polarization rotation control for the polarization controllers at the respective branches, so that the PBSs at the two branches are enabled to output optical signals which respectively have a single state of polarization, the two polarization directions being orthogonal. If the X' optical signal output by the PBS at the upper branch carries the 56Gb/s data carried by the X optical signal, and the Y' optical signal output by the PBS at the lower branch carries the 56Gb/s data carried by the Y optical signal, after the X' and Y' optical signals are demodulated by the post-stage DQPSK demodulator, two 28Gb/s data signals are restored respectively, namely, DATA1, DATA2, DATA3, and DATA4.

FIG. 3C illustrates changes of the state of polarization (State Of Polarization, SOP) of the optical signals passing through the receiving device in FIG. 3.

In FIG. 3C, the states of polarization of the optical signals at the upper and lower branches before entering the polarization controllers are the same, but the states of polarization of the optical signals output by the polarization controllers at the upper and lower branches are different. As a result, the PBSs at the upper and lower branches are enabled to output optical signals which respectively have a single state of polarization, the states of polarization being orthogonal, that is, the X' optical signal and the Y' optical signal.

The polarization controller in this embodiment may include a plurality of wave plates. In this embodiment, the wave plates may be driven by a voltage to rotate; and the angle of the wave plate is respectively corresponding to the control voltage of the polarization controller. When a wave plate rotates to a different angle, the state of polarization control conducted by the polarization controller on the input optical signal varies. That is, after the polarization multiplexed optical signal is input into the polarization controller, the state of polarization of the polarization multiplexed optical signal depends on the control voltage of the polarization controller. Therefore, if the two polarization controllers apply the same or similar control effect on the state of polarization of the respectively input optical signals, the control voltages of the two polarization controllers are undoubtedly the same or similar; that is, the angles of the wave plates of the two polarization controllers, namely, the control quantities, are undoubtedly the same or similar.

In this embodiment, the co-direction judger ensures that the optical signals output by the upper and lower branches are: X and Y optical signals, or Y and X optical signals. After the optical signals are demodulated at the two branches, {DATA1, DATA2, DATA3, and DATA4} or {DATA3, DATA4, DATA1, and DATA2} are obtained.

By using the existing multi-lane reordering technology, the receiving device ensures that the system outputs data in a correct order, for example, outputs data in an order of {DATA1, DATA2, DATA3, and DATA4}.

By using the MLD, the receiving device ensures that it outputs data in a correct order. The following describes the multi-lane reordering process of the MLD with reference to FIGs. 3D and 3E.

FIG. 3D is a schematic view of an OTU frame. The MLD takes turns to distribute the OTU frames to 20 lanes based on the value of the third byte OA2 in the frame header FAS (Frames, frames) of the OTU frame. FIG. 3E shows an example in which the receiving device distributes the OTU frames to the 20 lanes. Because the existing distribution process may be used, FIG. 3E is not described in detail herein. The serial number of each lane may be identified by the information carried in the FAS of the OTU frame. If Lane 1 at the receiving device side outputs the Y optical signal and Lane 2 outputs the X optical signal, the receiving device outputs data in this order: Lanes 11 to 20 and Lanes 1 to 10. The MLD reorders the 20 lanes based on the serial numbers of the channels in the frame header FAS of the OTU frame. After alignment, the MLD restores Lanes 1 to 20 and thereby restores the OTU frame correctly. This embodiment does not limit the specific implementation of how the receiving device ensures that the system outputs data in a correct order.

### Embodiment 3

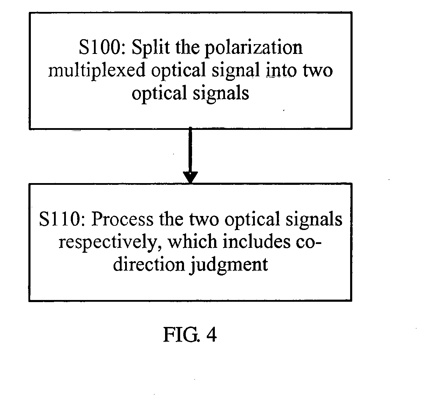

Embodiment 3 relates to a method for optical transmission based on polarization multiplexing. The process of the method is shown in FIG. 4.

In FIG. 4, at S100, the receiving device splits the polarization multiplexed optical signal from the transmitting device into two optical signals. Then, proceed to S110.

At S110, the two optical signals are respectively processed in the following manner. The state of polarization of the optical signal in one branch is rotated according to the state of polarization rotation control signal, and then polarization beam splitting is performed on the optical signal of which the state of polarization is rotated to obtain an optical signal with a single state of polarization. The control quantity is searched based on the optical signal with the single state of polarization, the minimum magnitude of the feedback signal of the control quantity is tracked, the control quantity is adjusted based on a principle that the magnitude of the feedback signal is minimum, and then the state of polarization rotation control signal is determined based on the adjusted control quantity.

S110 also involves co-direction judgment. The co-direction judgment means that when the similarity between the control quantities of the optical signals of the two branches meets the predetermined similarity criterion, at least one of the two branches is enabled to re-search for the control quantity until the similarity between the control quantities of the two optical signals does not meet the predetermined similarity criterion. The co-direction judgment is similar to the description about the co-direction judging module in the system and device of the preceding embodiments; in addition, the processing on the two optical signals described in S110 is similar to the description about the polarization control module, the PBS, and the feedback control loop in the system and device of the preceding embodiments, which will not be described herein again.

The process of searching for the control quantity at S110 includes a preliminary search process and a re-search process. The preliminary search process is a search process not triggered by the co-direction judgment process, while the re-search process is a search process triggered by the co-direction judgment process. For both the preliminary search process and the re-search process, the process of searching for the control quantity is as follows: generating a group of control quantities, obtaining the magnitude of the feedback signal corresponding to each control quantity in the group, and then selecting a control quantity in the group of control quantities based on a principle that the magnitude of the feedback signal is minimum. The selected control quantity or the selected control quantity and the corresponding magnitude of the feedback signal may be used as the subsequent start point of tracking. The search and tracking process at S110 may be similar to the description about the searching module and the tracking module in the system and device of the preceding embodiments, which will not be described herein again.

The magnitude of the feedback signal in this embodiment may be a radio frequency RF power.

The control quantity in this embodiment may be the angle of the wave plate. In this case, the state of polarization rotation control signal may be a loaded voltage determined based on the angle of the wave plate for the rotation of the state of polarization of the optical signal. In addition, at S110, the rotation of the state of polarization for the optical signal at the branch according to the state of polarization rotation control signal may include: driving, by the loaded voltage, the wave plate to rotate, and rotating the state of polarization of the optical signal in the branch based on the angle of the wave plate after the rotation.

When the control quantity is the angle of the wave plate, the corresponding relation between the voltage value and the angle of the wave plate may be stored in advance. In this way, after the control quantity is searched or tracked, the voltage value corresponding to the obtained control quantity may be determined based on the corresponding relation, so as to provide the loaded voltage for the state of polarization rotation based on the corresponding voltage value.

Through the preceding description of the embodiments, it is apparent to persons skilled in the art that the present invention may be accomplished by software on a necessary hardware platform, and definitely may be accomplished by hardware only, in which the former is generally much preferred. Therefore, all or a part of the technical solutions of the present invention that make contributions to the background art can be embodied in the form of a software product, and the software product can be used to implement the preceding method and process. The computer software product may be stored in a storage medium, for example, a ROM/RAM, a magnetic disk, or an optical disk, and contains several instructions to instruct a computer device (for example, a personal computer, a server, or a network device) to implement the methods as described in the embodiments of the present invention or in some parts of the embodiments.

Although the present invention has been described with reference to the embodiments, it is apparent to persons of ordinary skill in the art that variations and changes can be made in the present invention without departing from the scope of the present invention as defined by the appended claims.

## Claims

1. A receiving device for optical transmission system based on polarization multiplexing, comprising two branches, wherein optical signals polarization multiplexed by a transmitting device are respectively provided to the two branches, and each of the two branches comprise:
a polarization control module (311), configured to receive an optical signal from one branch, rotate a state of polarization of the optical signal according to a state of polarization rotation control signal, and output the processed optical signal;
a polarization beam splitting module (312), configured to perform polarization beam splitting on the optical signal output by the polarization control module in the branch, and output an optical signal with a single state of polarization; and further
each of the two branches comprise a feedback control loop module (313), which is configured to search for a control quantity according to the optical signal output by the polarization beam splitting module in the branch, track a minimum magnitude of a feedback signal of the control quantity, adjust the control quantity based on a principle that the magnitude of the feedback signal is minimum, output the searched or adjusted control quantity, and provide the state of polarization rotation control signal for the polarization control module in the branch according to the searched or adjusted control quantity; and **characterised in that**
the receiving device further comprises
a co-direction judging module (314), which is configured to, after judging that a similarity between the control quantities output by the feedback control loop modules at the two branches meets a predetermined similarity criterion, enable the feedback control loop module in at least one of the two branches to re-search for the control quantity until the similarity between the control quantities output by the feedback control loop modules at the two branches does not meet the predetermined similarity criterion.

2. The device according to claim 1, wherein the feedback control loop module (313) comprises:
an optical splitting module (3134), configured to split the optical signal output by the polarization beam splitting module to obtain one optical signal;
a feedback quantity extracting module (3135), configured to extract a magnitude of the feedback signal from the optical signal split by the optical splitting module, and output the magnitude of the feedback signal;
a searching module (3131), configured to, at a preliminary search or re-search stage, generate a group of control quantities, select a control quantity from the group of control quantities based on the principle that the magnitude of the feedback signal is minimum according to the magnitude of the feedback signal output by the feedback quantity extracting module, and output the selected control quantity;
a tracking module (3132), configured to receive the control quantity output from the searching module, track the minimum magnitude of the feedback signal of the received control quantity according to the magnitude of the feedback signal output from the feedback quantity extracting module, adjust the control quantity based on the principle that the magnitude of the feedback signal is minimum, and output the adjusted control quantity; and
an output control module (3133), configured to determine the state of polarization rotation control signal according to the control quantity output by the searching module or the tracking module, and provide the determined signal to the polarization control module in the branch.

3. The device according to claim 2, wherein the polarization control module (311) comprises a plurality of wave plates, the control quantity is an angle of the wave plate, the angle of the wave plate is driven by a voltage to rotate, and the state of polarization rotation control signal is a voltage loaded onto the polarization control module.

4. The device according to claim 3, wherein the output control module (3133) comprises:
a storage submodule (3133), configured to store a corresponding relation between the voltage value and the angle of the wave plate; and
an output control submodule (31332), configured to receive the control quantity output by the searching module or the tracking module, determine a voltage value corresponding to the received control quantity based on the corresponding relation, and provide a voltage to the polarization control module according to the determined voltage value.

5. The device according to any one of claims 1 to 4, wherein the co-direction judging module (314) comprises:
a judger (3141), configured to, after judging that the similarity between the control quantities output by the feedback control loop modules at the two branches meets the predetermined similarity criterion, output a jump control signal, where if the similarity between the control quantities output by the two feedback control loop modules at the branches does not meet the predetermined similarity criterion, no jump control signal is output; and
a jump control module (3142), configured to, after receiving the jump control signal output by the judger, trigger one feedback control loop module to re-search for the control quantity.

6. A method for optical transmission based on polarization multiplexing, comprising: splitting (S100) a received polarization multiplexed optical signal into two optical signals, wherein
the processing (S110) of the two optical signals comprises: receiving the optical signal from one branch, rotating a state of polarization of the optical signal in the branch according to a state of polarization rotation control signal, and performing polarization beam splitting on the optical signal of which the state of polarization is rotated to obtain an optical signal with a single state of polarization; searching for a control quantity according to the optical signal with the single state of polarization, tracking a minimum magnitude of a feedback signal of the control quantity, adjusting the control quantity based on a principle that the magnitude of the feedback signal is minimum, and determining the state of polarization rotation control signal according to the searched or adjusted control quantity; and
the method further comprises:
co-direction judgment: after judging that a similarity between the control quantities of the two optical signals meets a predetermined similarity criterion, enabling at least one of the two branches to re-search for the control quantity until the similarity between the control quantities of the two optical signals does not meet the predetermined similarity criterion.

7. The method according to claim 6, wherein the searching for the control quantity comprises:
during a preliminary search or re-search process of the control quantity, generating a group of control quantities, and obtaining magnitude of the feedback signals corresponding to the control quantities in the group; and
selecting a control quantity from the group of control quantities based on a principle that the magnitude of the feedback signal is minimum.

8. The method according to claim 6, wherein the magnitude of the feedback signal is a radio frequency RF power, the control quantity is an angle of a wave plate, and the state of polarization rotation control signal is a loaded voltage determined based on the angle of the wave plate for the rotation of the state of polarization of the optical signal; and
the rotating the state of polarization of the optical signal in the branch according to the state of polarization rotation control signal comprises:
driving, by the loaded voltage, the wave plate to rotate, and rotating the state of polarization of the optical signal in the branch based on the angle of the wave plate after the rotation.

9. The method according to claim 8, wherein the determining the state of polarization rotation control signal according to the searched or adjusted control quantity comprises:
determining a voltage value corresponding to the searched or adjusted control quantity based on a stored corresponding relation between the voltage value and the angle of the wave plate, and providing a loaded voltage for the rotation of the state of polarization based on the determined voltage value.

10. A system for optical transmission based on polarization multiplexing, comprising a transmitting device (300) and a receiving device (310), wherein the transmitting device (300) transmits a polarization multiplexed optical signal, and the optical signal is respectively provided to two branches in the receiving device, each of the two branches comprising:
a polarization control module (311), configured to receive an optical signal from one branch, rotate a state of polarization of the optical signal according to a state of polarization rotation control signal, and output the processed optical signal;
a polarization beam splitting module (312), configured to perform polarization beam splitting on the optical signal output by the polarization control module in the branch, and output an optical signal with a single state of polarization; and further
each of the two branches comprises a feedback control loop module (313), which is configured to search for a control quantity according to the optical signal output by the polarization beam splitting module in the branch, track a minimum magnitude of a feedback signal of the control quantity, adjust the control quantity based on a principle that the magnitude of the feedback signal is minimum, output the searched or adjusted control quantity, and provide the state of polarization rotation control signal for the polarization control module according to the searched or adjusted control quantity; and **characterised in that**
the receiving device further comprises
a co-direction judging module (314), which is configured to, after judging that a similarity between the control quantities output by the feedback control loop modules at the two branches meets a predetermined similarity criterion, enable the feedback control loop module in at least one of the two branches to re-search for the control quantity until the similarity between the control quantities output by the feedback control loop modules at the two branches does not meet the predetermined similarity criterion.

## Patentansprüche

1. Empfangsvorrichtung für ein auf einem Polarisationsmultiplexverfahren beruhendes optisches Übertragungssystem, das zwei Zweige aufweist, wobei durch eine Übertragungsvorrichtung polarisationsgemultiplexte optische Signale jeweils an die beiden Zweige geliefert werden, und jeder der beiden Zweige aufweist:
ein Polarisationssteuermodul (311), das konfiguriert ist, ein optisches Signal von einem Zweig zu empfangen, einen Polarisationszustand des optischen Signals gemäß einem Polarisationszustandsdrehungs-Steuersignal zu drehen, und das verarbeitete optische Signal auszugeben;
ein Polarisationsstrahlteilermodul (312), das konfiguriert ist, eine Polarisationsstrahlteilung am optischen Signal durchzuführen, das durch das Polarisationssteuermodul im Zweig ausgegeben wird, und ein optisches Signal mit einem einzigen Polarisationszustand auszugeben; und ferner
jeder der beiden Zweige ein Rückkopplungsregelschleifenmodul (313) aufweist, das konfiguriert ist, nach einer Steuerungsgröße gemäß dem optischen Signal zu suchen,
das durch das Polarisationsstrahlteilermodul im Zweig ausgegeben wird, eine Minimalgröße eines Rückkopplungssignals der Steuerungsgröße nachzuführen, die Steuerungsgröße beruhend auf einem Prinzip einzustellen, dass die Größe des Rückkopplungssignals minimal wird, die gesuchte oder eingestellte Steuerungsgröße auszugeben, und das Polarisationszustandsdrehungs-Steuersignal für das Polarisationssteuermodul im Zweig gemäß der gesuchten oder eingestellten Steuerungsgröße bereitzustellen; und **dadurch gekennzeichnet ist, dass**
die Empfangsvorrichtung ferner aufweist
ein Mitleitungsentscheidungsmodul (314), das konfiguriert ist, nach einer Entscheidung, dass eine Ähnlichkeit zwischen den Steuerungsgrößen, die durch die Rückkopplungsregelschleifenmodule an den beiden Zweigen ausgegeben werden, ein vorgegebenes Ähnlichkeitskriterium erfüllt, es dem Rückkopplungsregelschleifenmodul in mindestens einem der beiden Zweige zu ermöglichen, die Steuerungsgröße erneut zu suchen, bis die Ähnlichkeit zwischen den Steuerungsgrößen, die durch die Rückkopplungsregelschleifenmodule an den beiden Zweigen ausgegeben werden, das vorgegebene Ähnlichkeitskriterium nicht mehr erfüllt.

2. Vorrichtung nach Anspruch 1, wobei das Rückkopplungsregelschleifenmodul (313) aufweist:
ein optisches Teilermodul (3134), das konfiguriert ist, das optische Signal zu teilen, das durch das Polarisationsstrahlteilermodul ausgegeben wird, um ein optisches Signal zu erhalten;
ein Rückkopplungsgrößenextraktionsmodul (3135), das konfiguriert ist, eine Größe des Rückkopplungssignals aus dem optischen Signal zu extrahieren, das durch das optische Teilermodul geteilt wird, und die Größe des Rückkopplungssignals auszugeben;
ein Suchmodul (3131), das konfiguriert ist, in einem vorbereitenden Stadium einer Suche oder erneuten Suche eine Gruppe von Steuerungsgrößen zu erzeugen, eine Steuerungsgröße aus der Gruppe von Steuerungsgrößen beruhend auf dem Prinzip, dass die Größe des Rückkopplungssignals minimal wird, gemäß der Größe des Rückkopplungssignals auszuwählen, das durch das Rückkopplungsgrößenextraktionsmodul ausgegeben wird, und die ausgewählte Steuerungsgröße auszugeben;
ein Nachführungsmodul (3132), das konfiguriert ist, die Steuerungsgröße zu empfangen, die aus dem Suchmodul ausgegeben wird, die Minimalgröße des Rückkopplungssignals der empfangenen Steuerungsgröße gemäß der Größe des Rückkopplungssignals nachzuführen, das aus dem Rückkopplungsgrößenextraktionsmodul ausgegeben wird, die Steuerungsgröße beruhend auf dem Prinzip einzustellen, dass die Größe des Rückkopplungssignals minimal wird, und die eingestellte Steuerungsgröße auszugeben; und
ein Ausgabesteuermodul (3133), das konfiguriert ist, das Polarisationszustandsdrehungs-Steuersignal gemäß der Steuerungsgröße zu bestimmen, die durch das Suchmodul oder das Nachführungsmodul ausgegeben wird, und das bestimmte Signal an das Polarisationssteuermodul im Zweig zu liefern.

3. Vorrichtung nach Anspruch 2, wobei das Polarisationssteuermodul (311) mehrere Wellenplatten aufweist, die Steuerungsgröße ein Winkel der Wellenplatte ist, der Winkel der Wellenplatte durch eine Spannung angesteuert wird, sich zu drehen, und das Polarisationszustandsdrehungs-Steuersignal eine Spannung ist, die dem Polarisationssteuermodul zugeführt wird.

4. Vorrichtung nach Anspruch 3, wobei das Ausgabesteuermodul (3133) aufweist:
ein Speichersubmodul (3133), das konfiguriert ist, eine entsprechende Beziehung zwischen dem Spannungswert und dem Winkel der Wellenplatte zu speichern; und
ein Ausgabesteuersubmodul (31332), das konfiguriert ist, die Steuerungsgröße zu empfangen, die durch das Suchmodul oder das Nachführungsmodul ausgegeben wird, einen Spannungswert entsprechend der empfangenen Steuerungsgröße beruhend auf der entsprechenden Beziehung zu bestimmen, und gemäß dem bestimmten Spannungswert eine Spannung an das Polarisationssteuermodul zu liefern.

5. Vorrichtung nach einem der Ansprüche 1 bis 4, wobei das Mitleitungsentscheidungsmodul (314) aufweist:
eine Entscheidungsvorrichtung (3141), die konfiguriert ist, nach einer Entscheidung, dass die Ähnlichkeit zwischen den Steuerungsgrößen, die durch die Rückkopplungsregelschleifenmodule an den beiden Zweigen ausgegeben werden, das vorgegebene Ähnlichkeitskriterium erfüllt, ein Sprungsteuersignal auszugeben, wobei, wenn die Ähnlichkeit zwischen den Steuerungsgrößen, die durch die beiden Rückkopplungsregelschleifenmodule an den Zweigen ausgegeben werden, das vorgegebene Ähnlichkeitskriterium nicht erfüllt, kein Sprungsteuersignal ausgegeben wird; und
ein Sprungsteuermodul (3142), das konfiguriert ist, nach dem Empfang des Sprungsteuersignals, das durch die Entscheidungsvorrichtung ausgegeben wird, ein Rückkopplungsregelschleifenmodul zu triggern, die Steuerungsgröße erneut zu suchen.

6. Verfahren zur auf einem Polarisationsmultiplexverfahren beruhenden optischen Übertragung, das die folgenden Schritte aufweist: Aufteilen (S 100) eines empfangenen polarisationsgemultiplexten optischen Signals in zwei optische Signale, wobei die Verarbeitung (S 110) der beiden optischen Signale aufweist: Empfangen des optischen Signals von einem Zweig, Drehen eines Polarisationszustands des optischen Signals im Zweig gemäß einem Polarisationszustandsdrehungs-Steuersignal, und Durchführen einer Polarisationsstrahlteilung am optischen Signal, dessen Polarisationszustand gedreht ist, um ein optisches Signal mit einem einzigen Polarisationszustand zu erhalten; Suchen nach einer Steuerungsgröße gemäß dem optischen Signal mit dem einzigen Polarisationszustand, Nachführen einer Minimalgröße eines Rückkopplungssignals der Steuerungsgröße, Einstellen der Steuerungsgröße beruhend auf einem Prinzip, dass die Größe des Rückkopplungssignals minimal wird, und Bestimmen des Polarisationszustandsdrehungs-Steuersignals gemäß der gesuchten oder eingestellten Steuerungsgröße; und
das Verfahren ferner aufweist:
Mitleitungsentscheidung: nach einer Entscheidung, dass eine Ähnlichkeit zwischen den Steuerungsgrößen der beiden optischen Signale ein vorgegebenes Ähnlichkeitskriterium erfüllt, Ermöglichen, dass mindestens einer der beiden Zweige die Steuerungsgröße erneut sucht, bis die Ähnlichkeit zwischen den Steuerungsgrößen der beiden optischen Signale das vorgegebene Ähnlichkeitskriterium nicht mehr erfüllt.

7. Verfahren nach Anspruch 6, wobei das Suchen nach der Steuerungsgröße aufweist:
während eines Prozesses einer vorbereitenden Suche oder erneuten Suche der Steuerungsgröße, Erzeugen einer Gruppe von Steuerungsgrößen und Erhalten der Größe der Rückkopplungssignale entsprechend der Steuerungsgrößen in der Gruppe; und
Auswählen einer Steuerungsgröße aus der Gruppe der Steuerungsgrößen beruhend auf einem Prinzip, dass die Größe des Rückkopplungssignals minimal wird.

8. Verfahren nach Anspruch 6, wobei die Größe des Rückkopplungssignals eine Hochfrequenz-HF-Leistung ist, die Steuerungsgröße ein Winkel einer Wellenplatte ist, und das Polarisationszustandsdrehungs-Steuersignal eine zugeführte Spannung ist, die beruhend auf dem Winkel der Wellenplatte für die Drehung des Polarisationszustands des optischen Signals bestimmt wird; und
das Drehen des Polarisationszustands des optischen Signals im Zweig gemäß dem Polarisationszustandsdrehungs-Steuersignal aufweist:
Ansteuern durch die zugeführte Spannung, um die Wellenplatte zu drehen, und Drehen des Polarisationszustands des optischen Signals im Zweig beruhend auf dem Winkel der Wellenplatte nach der Drehung.

9. Verfahren nach Anspruch 8, wobei das Bestimmen des Polarisationszustandsdrehungs-Steuersignals gemäß der gesuchten oder eingestellten Steuerungsgröße aufweist:
Bestimmen eines Spannungswerts, der der gesuchten oder eingestellten Steuerungsgröße entspricht, beruhend auf einer gespeicherten entsprechenden Beziehung zwischen dem Spannungswert und dem Winkel der Wellenplatte, und Bereitstellen einer zugeführten Spannung für die Drehung des Polarisationszustands beruhend auf dem bestimmten Spannungswert.

10. System zur auf einem Polarisationsmultiplexverfahren beruhenden optischen Übertragung, das Folgendes aufweist: eine Übertragungsvorrichtung (300) und eine Empfangsvorrichtung (310), wobei die Übertragungsvorrichtung (300) ein polarisationsgemultiplextes optisches Signal überträgt, und das optische Signal jeweils an zwei Zweige in der Empfangsvorrichtung geliefert wird, wobei jeder der beiden Zweige aufweist:
ein Polarisationssteuermodul (311), das konfiguriert ist, ein optisches Signal von einem Zweig zu empfangen, einen Polarisationszustand des optischen Signals gemäß einem Polarisationszustandsdrehungs-Steuersignal zu drehen und das verarbeitete optische Signal auszugeben;
ein Polarisationsstrahlteilermodul (312), das konfiguriert ist, eine Polarisationsstrahlteilung am optischen Signal durchzuführen, das durch das Polarisationssteuermodul im Zweig ausgegeben wird, und ein optisches Signal mit einem einzigen Polarisationszustand auszugeben; und ferner
jeder der beiden Zweige ein Rückkopplungsregelschleifenmodul (313) aufweist, das konfiguriert ist, nach einer Steuerungsgröße gemäß dem optischen Signal zu suchen, das durch das Polarisationsstrahlteilermodul im Zweig ausgegeben wird, eine Minimalgröße eines Rückkopplungssignals der Steuerungsgröße nachzuführen, die Steuerungsgröße beruhend auf einem Prinzip einzustellen, dass die Größe des Rückkopplungssignals minimal wird, die gesuchte oder eingestellte Steuerungsgröße auszugeben, und das Polarisationszustandsdrehungs-Steuersignal für das Polarisationssteuermodul gemäß der gesuchten oder eingestellten Steuerungsgröße bereitzustellen; und **dadurch gekennzeichnet, dass**
die Empfangsvorrichtung ferner aufweist
ein Mitleitungsentscheidungsmodul (314), das konfiguriert ist, nach einer Entscheidung, dass eine Ähnlichkeit zwischen den Steuerungsgrößen, die durch die Rückkopplungsregelschleifenmodule an den beiden Zweigen ausgegeben werden, ein vorgegebenes Ähnlichkeitskriterium erfüllt, es dem Rückkopplungsregelschleifenmodul in mindestens einem der beiden Zweige zu ermöglichen, die Steuerungsgröße erneut zu suchen, bis die Ähnlichkeit zwischen den Steuerungsgrößen, die durch die Rückkopplungsregelschleifenmodule an den beiden Zweigen ausgegeben werden, das vorgegebene Ähnlichkeitskriterium nicht mehr erfüllt.

## Revendications

1. Dispositif de réception destiné à un système d'émission optique fondé sur le multiplexage de polarisation, comprenant deux dérivations, dans lequel des signaux optiques multiplexés en polarisation par un dispositif d'émission sont respectivement fournis aux deux dérivations, et chacune des deux dérivations comprend :
un module de commande de polarisation (311), configuré pour recevoir un signal optique en provenance d'une dérivation, soumettre à une rotation un état de polarisation du signal optique conformément à un signal de commande de rotation de l'état de polarisation, et fournir en sortie le signal optique traité ;
un module séparateur de faisceau de polarisation (312), configuré pour effectuer une séparation de faisceau de polarisation sur le signal optique fourni en sortie par le module de commande de polarisation de la dérivation, et fournir en sortie un signal optique ayant un état de polarisation unique ;
chacune des deux dérivations comprenant en outre un module à boucle de commande de rétroaction (313) qui est configuré pour rechercher une grandeur de commande conformément au signal optique fourni en sortie par le module séparateur de faisceau de polarisation de la dérivation, poursuivre une amplitude minimale d'un signal de rétroaction de la grandeur de commande, ajuster la grandeur de commande sur la base d'un principe selon lequel l'amplitude du signal de rétroaction est minimale,
fournir en sortie la grandeur de commande recherchée ou ajustée, et fournir l'état du signal de commande de rotation de polarisation destiné au module de commande de polarisation dans la dérivation conformément à la grandeur de commande recherchée ou ajustée ; et **caractérisé en ce que**
le dispositif de réception comprend en outre :
un module d'évaluation de codirection (314) qui est configuré, après l'évaluation selon laquelle une ressemblance entre les grandeurs de commande fournies en sortie par les modules à boucle de commande de rétroaction sur les deux dérivations répond à un critère de ressemblance prédéterminé, pour permettre au module à boucle de commande de rétroaction d'au moins l'une des deux dérivations de chercher à nouveau la grandeur de commande jusqu'à ce que la ressemblance entre les grandeurs de commande fournies en sortie par les modules à boucle de commande de rétroaction au niveau des deux dérivations ne réponde plus au critère de ressemblance prédéterminé.

2. Dispositif selon la revendication 1, dans lequel le module à boucle de commande de rétroaction (313) comprend :
un module de séparation optique (3134), configuré pour séparer le signal optique fourni en sortie par le module séparateur de faisceau de polarisation afin d'obtenir un signal optique ;
un module d'extraction de grandeur de rétroaction (3135), configuré pour extraire une amplitude du signal de rétroaction du signal optique séparé par le module de séparation optique, et fournir en sortie l'amplitude du signal de rétroaction ;
un module de recherche (3131), configuré, lors d'un stade de recherche préliminaire ou de nouvelle recherche, pour générer un groupe de grandeurs de commande, sélectionner une grandeur de commande dans le groupe de grandeurs de commande en se fondant sur le principe selon lequel l'amplitude du signal de rétroaction est minimale conformément à l'amplitude du signal de rétroaction fourni en sortie par le module d'extraction de grandeur de rétroaction, et fournir en sortie la grandeur de commande sélectionnée ;
un module de poursuite (3132), configuré pour recevoir la grandeur de commande fournie en sortie par le module de recherche, poursuivre l'amplitude minimale du signal de rétroaction de la grandeur de commande reçue conformément à l'amplitude du signal de rétroaction fourni en sortie par le module d'extraction de grandeur de rétroaction, ajuster la grandeur de commande sur la base du principe selon lequel l'amplitude du signal de rétroaction est minimale, et fournir en sortie la grandeur de commande ajustée ; et
un module de commande de sortie (3133), configuré pour déterminer l'état du signal de commande de rotation de polarisation conformément à la grandeur de commande fournie en sortie par le module de recherche ou le module de poursuite, et fournir le signal déterminé au module de commande de polarisation de la dérivation.

3. Dispositif selon la revendication 2, dans lequel le module de commande de polarisation (311) comprend une pluralité de lames d'onde, la grandeur de commande est un angle de la lame d'onde, l'angle de la lame d'onde est fixé par une tension de rotation, et l'état du signal de commande de rotation de polarisation est une tension appliquée au module de commande de polarisation.

4. Dispositif selon la revendication 3, dans lequel le module de commande de sortie (3133) comprend:
un sous-module de stockage (3133), configuré pour stocker une relation de correspondance entre la valeur de tension et l'angle de la lame d'onde ; et
un sous-module de commande de sortie (31332), configuré pour recevoir la grandeur de commande fournie en sortie par le module de recherche ou le module de poursuite, déterminer une valeur de tension correspondant à la grandeur de commande reçue sur la base de la relation de correspondance, et fournir une tension au module de commande de polarisation conformément à la valeur de tension déterminée.

5. Dispositif selon l'une quelconque des revendications 1 à 4, dans lequel le module d'évaluation de codirection (314) comprend :
un dispositif de jugement (3141) configuré, après avoir jugé que la ressemblance entre les grandeurs de commande fournies en sortie par les modules à boucle de commande de rétroaction au niveau des deux dérivations répond au critère de ressemblance prédéterminé, pour fournir en sortie un signal de commande de saut,
dans lequel, si la ressemblance entre les grandeurs de commande fournies en sortie par les deux modules à boucle de commande de rétroaction au niveau des dérivations ne répond pas au critère de ressemblance prédéterminé, aucun signal de commande de saut n'est fourni en sortie ; et
un module de commande de saut (3142), configuré pour déclencher, après réception du signal de commande de saut fourni en sortie par le dispositif de jugement, la recherche à nouveau par un module à boucle de commande de rétroaction de la grandeur de commande.

6. Procédé d'émission optique fondé sur le multiplexage de polarisation, comprenant : la séparation (S100) d'un signal optique multiplexé en polarisation reçu en deux signaux optiques, dans lequel
le traitement (S110) des deux signaux optiques comprend: la réception du signal optique en provenance d'une dérivation, la rotation d'un état de polarisation du signal optique dans la dérivation conformément à un état d'un signal de commande de rotation de polarisation, et l'exécution d'une séparation du faisceau de polarisation sur le signal optique dont l'état de polarisation a été soumis à une rotation afin d'obtenir un signal optique ayant un état de polarisation unique ; la recherche d'une grandeur de commande conformément au signal optique ayant l'état de polarisation unique, la poursuite d'une amplitude minimale d'un signal de rétroaction de la grandeur de commande, l'ajustement de la grandeur de commande sur la base d'un principe selon lequel l'amplitude du signal de rétroaction est minimale, et la détermination du signal de commande de rotation de l'état de polarisation conformément à la grandeur de commande recherchée ou ajustée ; et
le procédé comprend en outre :
une évaluation de codirection consistant à faire en sorte qu'après l'évaluation selon laquelle une ressemblance entre les grandeurs de commande des deux signaux optiques répond à un critère de ressemblance prédéterminé, au moins l'une des deux dérivations est activée pour chercher à nouveau la grandeur de commande jusqu'à ce que la ressemblance entre les grandeurs de commande des deux signaux optiques ne réponde plus au critère de ressemblance prédéterminé.

7. Procédé selon la revendication 6, dans lequel la recherche de la grandeur de commande comprend :
pendant un processus de recherche préliminaire ou de nouvelle recherche de la grandeur de commande, la génération d'un groupe de grandeurs de commande, et l'obtention de l'amplitude des signaux de rétroaction correspondant aux grandeurs de commande dans le groupe ; et
la sélection d'une grandeur de commande dans le groupe de grandeurs de commande sur la base d'un principe selon lequel l'amplitude du signal de rétroaction est minimale.

8. Procédé selon la revendication 6, dans lequel l'amplitude du signal de rétroaction est une puissance radiofréquence RF, la grandeur de commande est un angle d'une lame d'onde, et l'état du signal de commande de rotation de polarisation est une tension appliquée déterminée sur la base de l'angle de la lame d'onde pour la rotation de l'état de polarisation du signal optique ; et
la rotation de l'état de polarisation du signal optique dans la dérivation conformément à l'état du signal de commande de rotation de polarisation comprend :
la commande, par la tension appliquée, de la rotation de la lame d'onde, et la rotation de l'état de polarisation du signal optique de la dérivation sur la base de l'angle de la lame d'onde après la rotation.

9. Procédé selon la revendication 8, dans lequel la détermination de l'état du signal de commande de rotation de polarisation conformément à la grandeur de commande recherchée ou ajustée comprend :
la détermination d'une valeur de tension correspondant à la grandeur de commande recherchée ou ajustée sur la base d'une relation de correspondance stockée entre la valeur de tension et l'angle de la lame d'onde, et la fourniture d'une tension appliquée pour la rotation de l'état de polarisation sur la base de la valeur de tension déterminée.

10. Système d'émission optique fondé sur le multiplexage de polarisation, comprenant un dispositif d'émission (300) et un dispositif de réception (310), dans lequel le dispositif d'émission (300) émet un signal optique multiplexé en polarisation, et le signal optique est respectivement fourni à deux dérivations du dispositif de réception, chacune des deux dérivations comprenant :
un module de commande de polarisation (311), configuré pour recevoir un signal optique en provenance d'une dérivation, soumettre à une rotation un état de polarisation du signal optique conformément à un signal de commande de rotation de l'état de polarisation, et fournir en sortie le signal optique traité ;
un module séparateur de faisceau de polarisation (312), configuré pour effectuer une séparation de faisceau de polarisation sur le signal optique fourni en sortie par le module de commande de polarisation de la dérivation, et fournir en sortie un signal optique ayant un état de polarisation unique ;
chacune des deux dérivations comprenant en outre un module à boucle de commande de rétroaction (313) qui est configuré pour rechercher une grandeur de commande conformément au signal optique fourni en sortie par le module séparateur de faisceau de polarisation de la dérivation, poursuivre une amplitude minimale d'un signal de rétroaction de la grandeur de commande, ajuster la grandeur de commande sur la base d'un principe selon lequel l'amplitude du signal de rétroaction est minimale, fournir en sortie la grandeur de commande recherchée ou ajustée, et fournir l'état du signal de commande de rotation de polarisation destiné au module de commande de polarisation conformément à la grandeur de commande recherchée ou ajustée ; et **caractérisé en ce que**
le dispositif de réception comprend en outre :
un module d'évaluation de codirection (314) qui est configuré, après l'évaluation selon laquelle une ressemblance entre les grandeurs de commande fournies en sortie par les modules à boucle de commande de rétroaction sur les deux dérivations répond à un critère de ressemblance prédéterminé, pour permettre au module à boucle de commande de rétroaction d'au moins l'une des deux dérivations de chercher à nouveau la grandeur de commande jusqu'à ce que la ressemblance entre les grandeurs de commande fournies en sortie par les modules à boucle de commande de rétroaction au niveau des deux dérivations ne réponde plus au critère de ressemblance prédéterminé.
